(19) Europäisches Patentamt

European Patent Office

Office européen des brevets

(11) **EP 1 549 971 B1**

(12) **EUROPÄISCHE PATENTSCHRIFT**

(45) Veröffentlichungstag und Bekanntmachung des Hinweises auf die Patenterteilung:
**20.12.2006 Patentblatt 2006/51**

(51) Int Cl.:
*G01S 11/02* (2006.01)  *B60R 25/00* (2006.01)
*G07C 9/00* (2006.01)

(21) Anmeldenummer: **03757659.2**

(22) Anmeldetag: **08.09.2003**

(86) Internationale Anmeldenummer:
**PCT/DE2003/002968**

(87) Internationale Veröffentlichungsnummer:
**WO 2004/036241 (29.04.2004 Gazette 2004/18)**

(54) **VERFAHREN ZUR ERMITTLUNG DES ABSTANDS ZWISCHEN ZWEI SENDE-EMPFANGS-STATIONEN**

METHOD FOR DETERMINING THE DISTANCE BETWEEN TWO TRANSMITTING AND RECEIVING STATIONS

PROCEDE DE DETERMINATION DE LA DISTANCE ENTRE DEUX STATIONS EMETTRICES-RECEPTRICES

(84) Benannte Vertragsstaaten:
**DE FR**

(30) Priorität: **12.10.2002 DE 10247713**

(43) Veröffentlichungstag der Anmeldung:
**06.07.2005 Patentblatt 2005/27**

(73) Patentinhaber: **Conti Temic microelectronic GmbH**
**90411 Nürnberg (DE)**

(72) Erfinder:
• **KNEPPER, Udo**
  **88085 Langenargen (DE)**
• **RAU, Stefan**
  **88085 Langenargen (DE)**
• **ÖXLE, Thomas**
  **88677 Markdorf (DE)**
• **SCHULER, Rolf**
  **88682 Salem (DE)**
• **SCHULTER, Wolfgang**
  **88709 Meersburg (DE)**

(56) Entgegenhaltungen:
**DE-A- 10 019 277     DE-A- 19 926 234**

**Beschreibung**

Die Erfindung betrifft ein Verfahren zur Ermittlung des Abstands zwischen zwei Sende-Empfangs-Stationen gemäß dem Oberbegriff des Patentanspruchs 1.

Ein derartiges Verfahren ist aus der DE 100 19 277 A1 bekannt. Bei diesem Verfahren wird zwischen einem von einem Benutzer bei sich zu tragenden elektronischen Schüsselmodul und einer in einem Kraftfahrzeug vorgesehenen Auswerteeinheit eine Funkverbindung zur Übertragung von Daten aufgebaut, um das Schlüsselmodul anhand einer im Schlüsselmodul gespeicherten Identifikationsnummer zu identifizieren, und das Kraftfahrzeug ggf. zur Benutzung freizugeben. Der Aufbau der Funkverbindung erfolgt dabei über eine im Schlüsselmodul und eine in der Auswerteeinheit vorgesehene Sende-Empfangs-Station. Um zu verhindern, daß die Funkverbindung über Relaisstationen verlängert wird und das Kraftfahrzeug unbemerkt vom berechtigten Benutzer zur Benutzung freigegeben wird, wird der Abstand zwischen dem Schlüsselmodul und der Auswerteeinheit ermittelt und die Freigabe des Kraftfahrzeugs verhindert, wenn das Schlüsselmodul sich nicht im Nahbereich der Auswerteeinheit befindet. Die Abstandsermittlung basiert dabei auf einer Signallaufzeitauswertung der über die Funkverbindung übertragenen Signale.

Der Erfindung liegt die Aufgabe zugrunde, ein Verfahren zur Ermittlung des Abstands zwischen zwei Sende-Empfangs-Stationen anzugeben, das mit geringem Aufwand durchführbar ist und die Messung beliebiger Abstände mit hoher Auflösung ermöglicht.

Die Aufgabe wird durch die Merkmale des Patentanspruchs 1 gelöst. Vorteilhafte Ausgestaltungen und Weiterbildungen ergeben sich aus den Unteransprüchen.

Erfindungsgemäß wird der Abstand zwischen zwei Sende-Empfangs-Stationen durch Messung der Signallaufzeit von in den Sende-Empfangs-Stationen erzeugten und zur jeweils anderen Sende-Empfangs-Station ausgesendeten Sendesignalen ermittelt. Die Sendesignale werden dabei jeweils als Mikrowellenimpulsreihe mit vorgegebener Impulswiederholfrequenz erzeugt, wobei die Impulswiederholfrequenzen sich voneinander um einen vorgegebenen, vorzugsweise gegenüber den Impulswiederholfrequenzen geringen Differenzfrequenzwert unterscheiden. Des weiteren wird in jeder der Sende-Empfangs-Stationen das Zusammentreffen von Impulsen des von der jeweiligen Sende-Empfangs-Station ausgesendeten Sendesignals und empfangenen Empfangssignals als Koinzidenzereignis detektiert, und es werden für jede Sende-Empfangs-Station zwei der jeweiligen Sende-Empfangs-Station zugeordnete Impulszahlen ermittelt, die als Sendeimpulszahl bzw. Empfangsimpulszahl die Anzahl der Impulse des von der jeweiligen Sende-Empfangs-Station ausgesendeten Sendesignals bzw. empfangenen Empfangssignals zum Zeitpunkt eines Koinzidenzereignisses darstellen. Die Signallaufzeit der Sendesignale und der Abstand zwischen den Sende-Empfangs-Stationen wird dann aus den ermittelten Impulszahlen berechnet.

Vorzugsweise wird für jede Sende-Empfangs-Station ein dem zeitlichen Abstand zwischen dem ersten von der jeweiligen Sende-Empfangs-Station ausgesendeten Impuls und dem ersten von der gleichen Sende-Empfangs-Station empfangenen Impuls entsprechender Zeitabstand aus den für die jeweilige Sende-Empfangs-Station ermittelten Impulszahlen ermittelt und der Abstand zwischen den Sende-Empfangs-Stationen durch Summation der ermittelten Zeitabstände berechnet.

Vorzugsweise wird eine Entfernungsmaßzahl als Maß des Abstands zwischen den Sende-Empfangs-Stationen nach der Gleichung

$$x = \big((m(i) - p(j)\big) \cdot g - \big((n(i) - q(j)\big) \cdot h$$

berechnet, wobei x die Entfernungsmaßzahl darstellt g und h die auf eine Referenzzeit normierten Perioden des von der einen bzw. anderen Sende-Empfangs-Station ausgesendeten Sendesignals darstellen, i und j Zählvariablen für die Anzahl der in der einen bzw. anderen Sende-Empfangs-Station ermittelten Koinzidenzereignisse darstellen, $m(i)$ und $n(i)$ die der einen Sende-Empfangs-Station zugeordnete Sendeimpulszahl bzw. Empfangsimpulszahl zum Zeitpunkt des i-ten Koinzidenzereignisses darstellen und $q(j)$ und $p(j)$ die der anderen Sende-Empfangs-Station zugeordnete Sendeimpulszahl bzw. Empfangsimpulszahl zum Zeitpunkt des j-ten Koinzidenzereignisses darstellen.

In einer bevorzugten Weiterbildung des Verfahrens werden die für die eine Sende-Empfangs-Station ermittelten Impulszahlen durch Modulation des in der einen Sende-Empfangs-Station erzeugten Sendesignals, vorzugsweise durch eine Phasenmodulation, zur anderen Sende-Empfangs-Station übertragen. Der Abstand zwischen den Sende-Empfangs-Stationen wird dann dort aus den Impulszahlen berechnet.

Vorzugsweise werden die Impulszahlen durch Zählen der Impulse des jeweiligen Sende- bzw. Empfangssignals ermittelt.

In einer bevorzugten Ausgestaltung des Verfahrens werden jedoch nur die Impulse der in den Sende-Empfangs-Station erzeugten Sendesignale gezählt und als Sendeimpuls-Zählerstände bereitgestellt. Für die eine Sende-Empfangs-Station wird die Sendeimpulszahl und Empfangsimpulszahl ermittelt, indem aus dem in der anderen Sende-Empfangs-Station erzeugten Sendesignal ein Impuls ausgewählt wird, der einem bestimmten Sendeimpuls-Zählerstand entspricht, dieser ausgewählte Impuls beispielsweise durch eine Phasenmodulation zeitlich verschoben oder unterdrückt wird und geprüft wird, ob in der einen Sende-Empfangs-Station daraufhin das nächste Koinzidenzereignis zu einem erwarteten Zeitpunkt eintritt. Wenn zu dem erwarteten Zeitpunkt kein Koinzidenzereignis eintritt, weil dieses infolge der Phasenmodulation des ausgewählten Impulses unterdrückt oder zeitlich verschoben wird, wird der einen Sende-Empfangs-Station der in ihr zu dem erwarteten Zeitpunkt ermittelte Sendeimpuls-Zählerstand als Sendeimpulszahl zugeordnet und der Sendeimpuls-Zählerstand des ausgewählten Impulses als Empfangsimpulszahl zugeordnet. Ansonsten werden die Verfahrensschritte mit neuen ausgewählten Impulsen so oft wiederholt, bis ein Koinzidenzereignis auch nach der Phasenmodulation des ausgewählten Impulses zu einem erwarteten Zeitpunkt ausbleibt.

Vorzugsweise werden die Empfangsimpulszahlen für beide Sende-Empfangs-Stationen in gleicher Weise ermittelt.

Vorzugsweise wird zur Ermittlung der Koinzidenzereignisse in jeder Sende-Empfangs-Station das in der jeweiligen Sende-Empfangs-Station erzeugte Sendesignal mit dem von dieser Station empfangenden Empfangssignal durch Mischung in ein Zwischenfrequenzsignal und durch anschließende Filterung, Verstärkung und Hüllkurvendenmodulation in ein impulsförmiges Auswertesignal umgesetzt. Die Pulse der Auswertesignale markieren dann die Zeitpunkte der Koinzidenzereignisse.

Der wesentliche Vorteil des erfindungsgemäßen Verfahrens liegt darin, daß es einen großen Meßbereich aufweist und dennoch eine hochauflösende Messung ermöglicht.

Das erfindungsgemäße Verfahren eignet sich bestens für den Einsatz in einem schlüssellosen Schließsystem für Kraftfahrzeuge. Bei einem derartigen Schließsystem ist im Kraftfahrzeug eine Basisstation als Auswerteeinheit vorgesehen, die über eine Funkstrecke mit tragbaren Schlüsselmodulen kommuniziert. Die Funkverbindung wird dabei über Sende-Empfangs-Stationen aufgebaut, die in der Basisstation bzw. in den Schlüsselmodulen vorgesehen sind. Der Verbindungsaufbau kann unbemerkt vom Benutzer, beispielsweise durch Betätigung eines Türgriffs erfolgen. Über die Funkverbindung werden Daten ausgetauscht, insbesondere werden in den Schlüsselmodulen gespeicherte Identifikationsnummern - vorteilhafterweise in verschlüsselter Form - zur Basisstation übertragen. Die Basisstation ermöglicht den Zugang zum Kraftfahrzeug, wenn sie anhand der Identifikationsnummer eines Schlüsselmoduls erkennt, daß diesem Schlüsselmodul eine Zugangsberechtigung zugeordnet ist, und wenn das Schlüsselmodul sich innerhalb eines bestimmten Abstands zur Basisstation befindet. Der Abstand wird dabei nach dem erfindungsgemäßen Verfahren ermittelt. Aufgrund der hohen Auflösung ist es zudem möglich, festzustellen, ob das Schlüsselmodul sich innerhalb oder außerhalb des Kraftfahrzeugs befindet. Damit ist es möglich, das Verriegeln des Kraftfahrzeugs zu verhindern, wenn das Schlüsselmodul sich im Inneren des Kraftfahrzeugs befindet.

Durch die Berücksichtigung des Abstands zwischen der Basisstation und dem Schlüsselmodul wird die Sicherheit des Schließsystems erhöht, weil der Zugang zum Kraftfahrzeug auch bei korrekter Identifikationsnummer verhindert wird, wenn der Abstand zwischen dem Schlüsselmodul und der Basisstation einen bestimmten Wert überschreitet. Unbefugten ist es damit nicht möglich, sich unbemerkt vom berechtigten Benutzer Zugang zum Kraftfahrzeug zu beschaffen, indem sie über Relaisstationen eine Funkverbindung zwischen dem Schlüsselmodul und der Basisstation aufbauen.

Die Erfindung wird nachfolgend anhand von Ausführungsbeispielen und Figuren näher erläutert. Es zeigen:

Figur 1        ein Blockschaltbild mit zwei Sende-Empfangs-Stationen zur Durchführung des erfindungsgemäßen Verfahrens,

Figur 2-3      Zeitdiagramme von in den Sende-Empfangs-Stationen erzeugten und verarbeiteten Signalen.

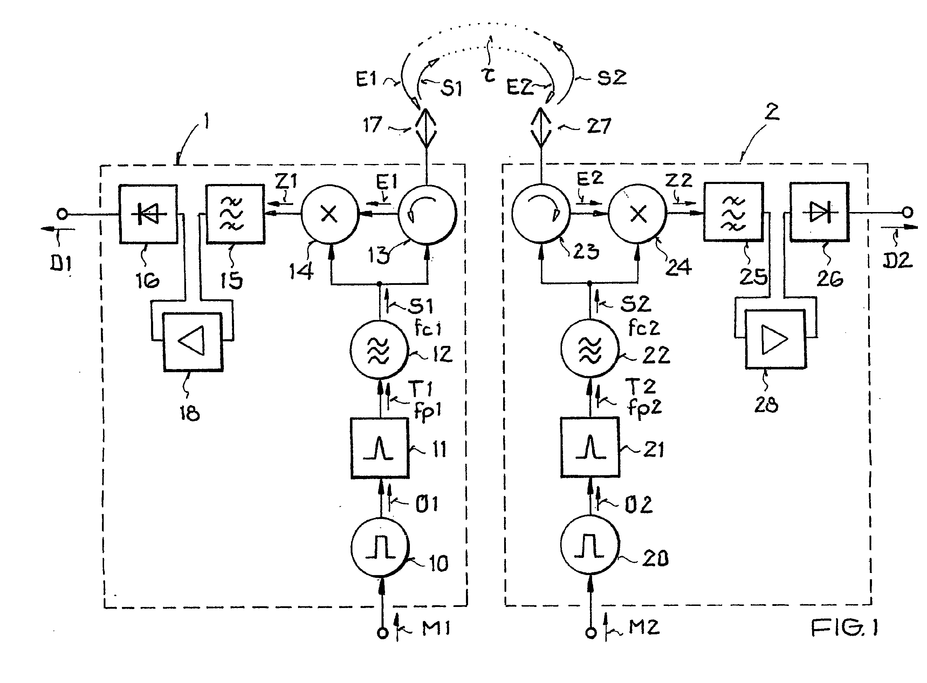

Gemäß Figur 1 sind die beiden Sende-Empfangs-Stationen 1 und 2 gleich ausgeführt. Sie sind Bestandteil eines schlüssellosen Schließsystems für Kraftfahrzeuge, wobei die erste Sende-Empfangs-Station 1 Teil einer im Kraftfahrzeug vorgesehenen Auswerteeinheit und die zweite Sende-Empfangs-Station 2 Teil eines tragbaren Schlüsselmoduls ist. Zwischen den Sende-Empfangs-Stationen 1, 2 werden Daten ausgetauscht, um das Schlüsselmodul anhand einer im Schlüsselmodul gespeicherten Identifikationsnummer zu identifizieren und das Kraftfahrzeug ggf. zur Benutzung freizugeben.

Die erste Sende-Empfangs-Station 1 umfaßt einen hochstabilen modulierbaren Oszillator 10, einen Pulsformer 11, einen Mikrowellenoszillator 12, einen Koppler 13, einen Mischer 14, ein ZF-Filter 15, einen ZF-Verstärker 18, einen Hüllkurvendenmodulator 16 und eine Sende-Empfangs-Antenne 17. Entsprechend umfaßt auch die zweite Sende-Empfangs-Station 2 einen hochstabilen modulierbaren Oszillator 20, einen Pulsformer 21, einen Mikrowellenoszillator 22, einen Koppler 23, einen Mischer 24, ein ZF-Filter 25, einen ZF-Verstärker 28, einen Hüllkurvendenmodulator 26 und eine Sende-Empfangs-Antenne 27.

Die Sende-Empfangs-Stationen 1 und 2 werden durch einen Weckvorgang aktiviert und arbeiten gleichzeitig.

Dabei erzeugt der modulierbare Oszillator 10 in der ersten Sende-Empfangs-Station 1 ein nach Maßgabe eines Steuersignals M1 in der Phase modulierbares Oszillatorsignal O1 das dem Pulsformer 11 zugeführt wird, der daraus ein Triggersignal T1 mit schmalen Impulsen erzeugt, deren Pulsabstand oder Impulswiederholfrequenz fp1 durch die Schwingungsfrequenz des Oszillatorsignals O1 bestimmt wird. Das Triggersignal T1 wird dem Mikrowellenoszillator 12 zugeführt, der in Antwort auf die Impulse des Triggersignals T1 jeweils einen Mikrowellenpuls mit einigen Perioden der Trägerfrequenz fc1 des Mikrowellenoszillators 12 erzeugt. Der Mikrowellenoszillator 12 gibt somit eine Mikrowellenimpulsreihe als erstes Sendesignal S1 ab, das über den Koppler 13 der Sende-Empfangs-Antenne 17 sowie dem Mischer 14 zugeführt wird.

Analog dazu erzeugt der modulierbare Oszillator 20 in der zweiten Sende-Empfangs-Station 2 ebenfalls ein nach Maßgabe eines Steuersignals M2 in der Phase modulierbares Oszillatorsignal 02, das dem Pulsformer 21 zugeführt wird, der daraus ebenfalls ein Triggersignal T2 mit schmalen Impulsen erzeugt, deren Impulswiederholfrequenz fp2 durch die Schwingungsfrequenz des Oszillatorsignals 02 bestimmt wird. Das Triggersignal T2 wird dem Mikrowellenoszillator 22 zugeführt, der in Antwort auf die Impulse des Triggersignals T2 jeweils einen Mikrowellenpuls mit einigen Perioden der Trägerfrequenz fc2 des Mikrowellenoszillators 22 erzeugt. Der Mikrowellensoszillator 22 gibt somit eine Mikrowellenimpulsreihe als zweites Sendesignal S2 ab, das über den Koppler 23 der Sende-Empfangs-Antenne 27 sowie dem Mischer 24 zugeführt wird.

Über die Sende-Empfangs-Antennen 17 und 27 werden dann das erste bzw. zweite Sendesignal S1 bzw. S2 zur zweiten bzw. ersten Sende-Empfangs-Station 2 bzw. 1 ausgesendet und nach einer zeitlichen Verzögerung um eine Signallaufzeit τ dort über die Sende-Empfangs-Antenne 27 bzw. 17 als zweites bzw. erstes Empfangssignal E2 bzw. E1 empfangen.

In der ersten Sende-Empfangs-Station 1 wird das erste Empfangssignal E1 dann im Mischer 14 mit dem ersten Sendesignal S1 zu einem Zwischenfrequenzsignal Z1 zusammengeführt, aus dem durch Filterung im ZF-Filter 15, Verstärkung im ZF-Verstärker 18 und anschließende Demodulation im Hüllkurvendemodulator 16 ein erstes Auswertesignal D1 erzeugt wird. Entsprechend wird in der zweiten Sende-Empfangs-Station 2 das zweite Empfangssignal E2 im Mischer 24 mit dem zweiten Sendesignal S2 zu einem Zwischenfrequenzsignal Z2 zusammengeführt, aus dem durch Filterung im ZF-Filter 25, Verstärkung im ZF-Verstärker 28 und anschließende Demodulation im Hüllkurvendemodulator 26 ein zweites Auswertesignal D2 erzeugt wird.

Die Signallaufzeit τ ist die Zeit, die die Sendesignale S1, S2 benötigen, um von der einen Sende-Empfangs-Station zur anderen zu gelangen. Sie ist aufgrund der festen Ausbreitungsgeschwindigkeit von elektromagnetischen Wellen ein Maß für den gesuchten Abstand zwischen den beiden Sende-Empfangs-Stationen 1, 2.

Die Trägerfrequenzen fc1, fc2 der Sendesignale S1, S2 sind gleich und liegen beispielsweise in dem Bereich von einigen GHz. An sie werden jedoch keine hohen Anforderungen bezüglich ihrer Genauigkeit und Frequenzstabilität gestellt.

Die Breite der Impulse der Triggersignale T1, T2 liegt in dem Bereich von ca. 1 ns und die Impulswiederholfrequenzen fp1, fp2 der Sendesignale S1, S2 liegen beispielsweise im Bereich von einigen MHz. Wesentlich ist, daß die Impulswiederholfrequenzen fp1, fp2 sich voneinander um einen Differenzfrequenzwert fd unterscheiden. Die Genauigkeit der Messung ist dabei von der Genauigkeit und Frequenzstabilität der Impulswiederholfrequenzen fp1, fp2 abhängig.

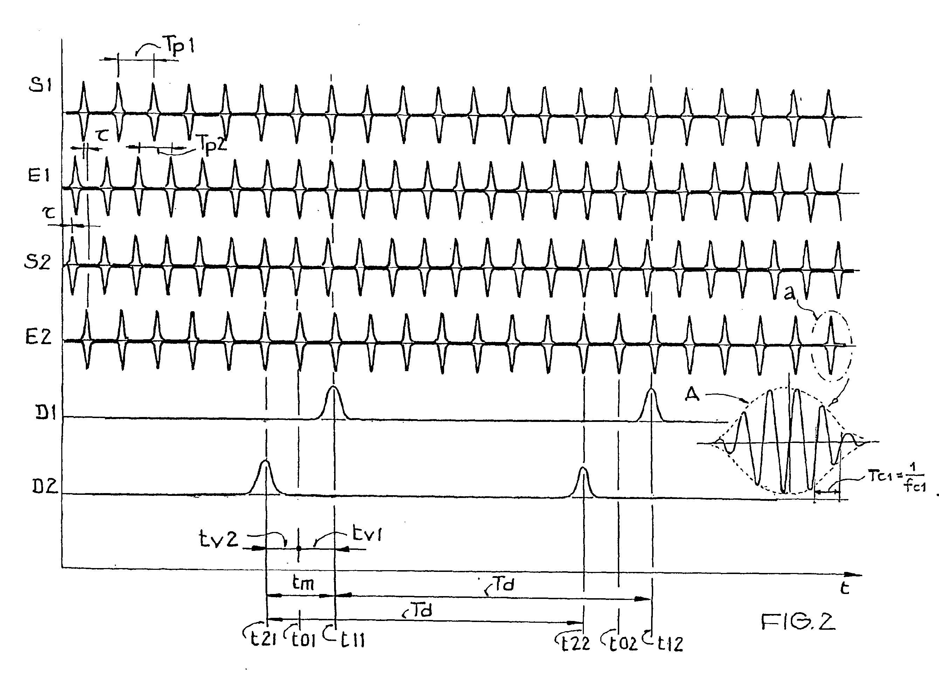

Figur 2 zeigt die Zeitdiagramme der von den Sende-Empfangs-Stationen 1, 2 ausgesendeten Sendesignale S1, S2, der von den Sende-Empfangs-Stationen 1, 2 empfangenen Empfangssignale E1, E2 und der Auswertesignale D1, D2 für eine Signallaufzeit τ > 0. Dargestellt sind - wie in der Vergrößerungsdarstellung A des Abschnitts a angedeutet - lediglich die Hüllkurven der Signale S1, S2, E1, E2. Diese stellen Impulse dar, die im Falle des ersten Sendesignals S1 und des zweiten Empfangssignals E2 um eine Pulsperiode Tp1 voneinander beabstandet sind und im Falle des zweiten Sendesignals S2 und des ersten Empfangssignals E1 um eine Pulsperiode Tp2 voneinander beabstandet sind. Die Pulsperioden Tp1, Tp2 entsprechen dabei dem Kehrwert der Impulswiederholfrequenz fp1 bzw. fp2 des jeweiligen Signals.

Die Mischung in den Mischern 14, 15 entspricht einer Abtastung des ersten und zweiten Empfangssignals E1, E2 mit dem ersten bzw. zweiten Sendesignal S1 bzw. S2. Der Differenzfrequenzwert fd ist so gering gewählt, daß es sich hierbei um eine Unterabtastung handelt.

Die resultierenden Auswertesignale D1, D2 sind ebenfalls impulsförmige Signale, deren Impulse periodisch im gleichen Pulsabstand Td auftreten. Für den Pulsabstand Td gilt dabei Td = 1/fd, wobei fd den Differenzfrequenzwert darstellt, um den sich die Impulswiederholfrequenzen fp1, fp2 voneinander unterscheiden. Die Impulse des ersten Auswertesignals D1 treten dabei zu Zeitpunkten t11, t12 auf, zu denen Impulse des ersten Sendesignals S1 und des ersten Empfangssignals E1 zusammentreffen. Diese Zeitpunkte markieren somit jeweils ein Koinzidenzereignis und werden im folgenden als erste Koinzidenzzeitpunkte bezeichnet. Entsprechend treten die Impulse des zweiten Auswertesignals D2 zu Zeitpunkten t21, t22 auf, zu denen Impulse des zweiten Sendesignals S2 und des zweiten Empfangssignals E2 zusammentreffen. Diese Zeitpunkte markieren ebenfalls jeweils ein Koinzidenzereignis und werden nachfolgend als zweite Koinzidenzzeitpunkte bezeichnet. In der Figur sind noch Zeitpunkte t01, t02 dargestellt, zu denen die Impulse der beiden Sendesignale S1, S2 zeitlich zusammentreffen. Diese Zeitpunkte sind ebenfalls um den Pulsabstand Td voneinander beabstandet.

Die Impulse der beiden Auswertesignale D1, D2 sind gegeneinander um eine zur Signallaufzeit τ proportionale Zeit·tm = tv1 + tv2 versetzt.

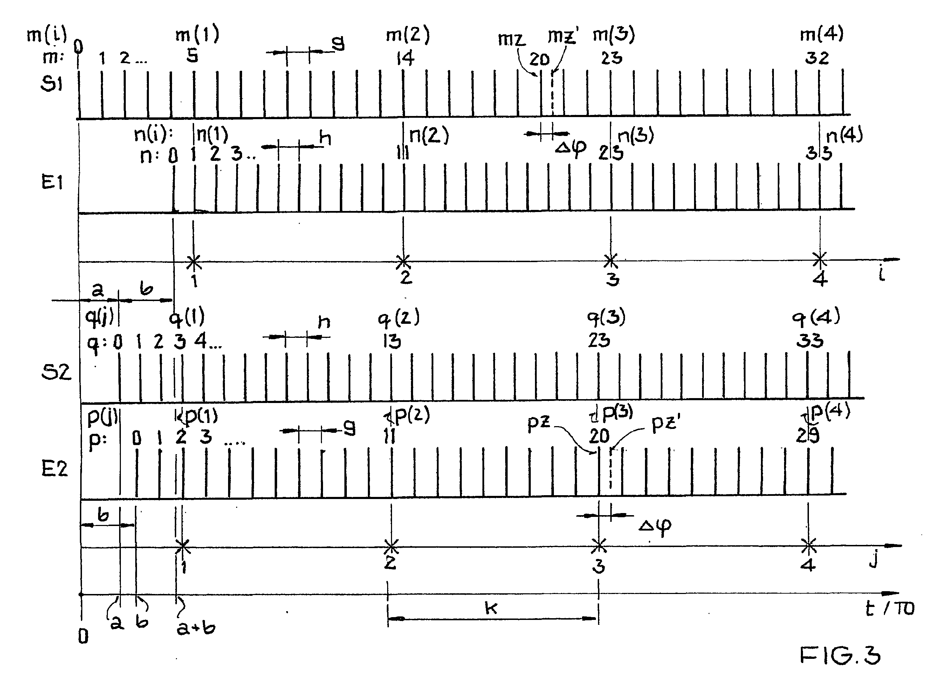

Figur 3 zeigt die Impulse der Signale S1, S2, E1, E2 in einer Darstellung mit einer auf eine Referenzzeit T0 normierten Zeitachse. Die Impulse sind dabei vereinfacht durch Striche dargestellt. Die Referenzzeit T0 entspricht der Meßauflösung des Systems. Sie wird aus den Impulswiederholfrequenzen fp1, fp2 der Sendesignale S1, S2 wie folgt berechnet

$$T0 = \frac{|fp1 - fp2|}{fp1 \cdot fp2}.$$

Gemäß der Figur beginnt die erste Sende-Empfangs-Station 1 mit der Erzeugung einer Impulsfolge und sendet diese als erstes Sendesignals S1 aus. Die Impulse sind dabei um eine die normierte Periode g = Tp1/T0 voneinander beabstandet. Weiterhin weckt die erste Sende-Empfangs-Station 1 die zweite Sende-Empfangs-Station 2 über eine Funkstrecke, woraufhin die zweite Sende-Empfangs-Station 2 nach einer normierten Asynchronzeit a ebenfalls mit der Erzeugung einer Impulsfolge beginnt und diese als zweites Sendesignal S2 aussendet. Die Impulse des zweiten Sendesignals S2 sind dabei um eine normierte Periode h = Tp2/T0 voneinander beabstandet.

Die normierten Perioden g, h werden so gewählt, daß sie teilerfremde ganze Zahlen sind, ihre Werte betragen beispielsweise g = 1001 und h = 1000.

Das zweite Empfangssignal E2 entspricht dem um eine normierte Signallaufzeit b = τ/T0 verzögerten ersten Sendesignal S1 und das erste Empfangssignal E1 dem um die gleich normierte Signallaufzeit b verzögerten zweiten Sendesignal S2.

In der Figur sind noch Impulszählerstände m, n, p und q dargestellt. Zur einfacheren Darstellung wurde dabei g = 9 und h = 10 gewählt. Der Impulszählerstand m stellt dabei als Sendeimpuls-Zählerstand die Anzahl der zu einem bestimmten Zeitpunkt von der ersten Sende-Empfangs-Station 1 ausgesendeten Impulse dar und der Impulszählerstand n als Empfangsimpuls-Zählerstand die Anzahl der von der ersten Sende-Empfangs-Station 1 empfangenen Impulse dar. Analog dazu stellt der Impulszählerstand q als Sendeimpuls-Zählerstand die Anzahl der von der zweiten Sende-Empfangs-Station 2 zu einem bestimmten Zeitpunkt ausgesendeten Impulse dar und der Impulszählerstand p als Empfangsimpuls-Zählerstand die Anzahl der von der zweiten Sende-Empfangs-Station 2 empfangenen Impulse dar.

Die Koinzidenzereignisse sind in der Figur auf der i- und j-Achse mit x markiert. Sie treten dann ein, wenn Impulse des ersten Sendesignals S1 mit Impulsen des ersten Empfangssignals E1 zusammentreffen bzw. wenn Impulse des zweiten Sendesignals S2 mit Impulsen des zweiten Empfangssignals E2 zusammentreffen und sie werden gemäß den Ausführungen zu Figur 1 und 2 anhand der Auswertesignale D1, D2 detektiert. Die Variablen i und j zählen dabei die in der ersten Sende-Empfangs-Station 1 bzw. zweiten Sende-Empfangs-Station 2 detektierten Koinzidenzereignisse. Die Koinzidenzereignisse wiederholen sich in beiden Sende-Empfangs-Stationen 1, 2 mit der gleichen normierten Koinzidenzperiode k=g•h.

Jedem in der ersten Sende-Empfangs-Station 1 detektierten Koinzidenzereignis i werden zwei Impulszahlen, eine Sendeimpulszahl m(i) und eine Empfangsimpulszahl n(i), zugeordnet. Die Sendeimpulszahl m(i) und die Empfangsimpulszahl n(i) entsprechen dabei dem Sendeimpuls-Zählerstand m bzw. dem Empfangsimpuls-Zählerstand n der ersten Sende-Empfangs-Station 1 zum Zeitpunkt des i-ten Koinzidenzereignisses.

Analog dazu werden jedem in der zweiten Sende-Empfangs-Station 2 detektierten Koinzidenzereignis j zwei Impulszahlen, eine Sendeimpulszahl q(j) und eine Empfangsimpulszahl p(j), zugeordnet. Die Sendeimpulszahl q(j) und die Empfangsimpulszahl p(j) entsprechen dabei dem Sendeimpuls-Zählerstand q bzw. dem Empfangsimpuls-Zählerstand p der zweiten Sende-Empfangs-Station 2 zum Zeitpunkt des j-ten Koinzidenzereignisses.

Die Ermittlung des Abstands zwischen den Sende-Empfangs-Stationen 1, 2 basiert auf der Ermittlung der normierten Signallaufzeit b, welche ihrerseits auf der Summation zweier Zeitabstände a+b, b-a basiert, wobei der eine Zeitabstand a+b dem zeitlichen Abstand zwischen dem ersten von der ersten Sende-Empfangs-Station 1 ausgesendeten Impuls und dem ersten von der ersten Sende-Empfangs-Station 1 empfangenen Impuls entspricht und der andere Zeitabstand b-a dem zeitlichen Abstand zwischen dem ersten von der zweiten Sende-Empfangs-Station 2 ausgesendeten Impuls und dem ersten von der zweiten Sende-Empfangs-Station 2 empfangenen Impuls entspricht. Diese Zeitabstände a+b, b-a lassen sich auf einfache Weise aus den Impulszahlen m(i), n(i), q(j), p(j) und den normierten Perioden g, h ermitteln.

Gemäß der Figur gilt nämlich für die einem Koinzidenzereignis i zugeordneten Impulszahlen m(i), n(i) der ersten Sende-Empfangs-Station 1 die Beziehung

$$m(i) \bullet g = a + b + n(i) \bullet h$$

und für die einem Koinzidenzereignis j zugeordneten Impulszahlen q(j), p(j) der zweiten Sende-Empfangs-Station 2 die Beziehung

$$a + q(j) \bullet h = b + p(j) \bullet g.$$

Damit ergeben sich die Zeitabstände a+b, b-a zu

$$a + b = m(i) \bullet g - n(i) \bullet h$$

$$b - a = + q(j) \bullet h - p(j) \bullet g.$$

Durch Summation dieser Gleichungen erhält man dann eine zur normierten Signallaufzeit b proportionale Entfernungsmaßzahl x als Maß des Abstands zwischen den Sende-Empfangs-Stationen 1, 2. Für die Entfernungsmaßzahl x gilt

$$x = 2\,b = \big((m(i) - p(j))\big) \cdot g - \big((n(i) - q(j))\big) \cdot h\,.$$

Das gleiche Ergebnis erhält man auch dann, wenn die Zählung der Impulse nicht wie in der Figur dargestellt mit 0 sondern mit 1 oder einer anderen Zahl beginnt.
Die Signallaufzeit $\tau$ der Sendesignale S1, S2 ist gemäß der Gleichung.

$$\tau = \frac{d}{c0}$$

proportional zum Abstand d zwischen den Sende-Empfangs-Station 1, 2 und umgekehrt proportional zur Lichtgeschwindigkeit c0. Mit b = $\tau$/T0 kann dann aus der Entfernungsmaßzahl x der gesuchte Abstand d gemäß der Gleichung

$$d = \frac{1}{2} \cdot x \cdot c0 \cdot T0$$

berechnet werden.
Wenn die in der zweiten Sende-Empfangs-Station 2 ermittelten Impulszahlen q(j) und p(j) zur ersten Sende-Empfangs-Station 1 übertragen werden, beispielsweise über eine Funkverbindung oder durch Modulation des zweiten Sendesignals S2, liegen in der ersten Sende-Empfangs-Station 1 sämtliche zur Berechnung der Entfernungsmaßzahl x erforderlichen Impulszahlen m(i), n(i), q(j), p(j) vor. Die Entfernungsmaßzahl x kann damit ohne weiteres in der ersten Sende-Empfangs-Station 1 ermittelt werden.
Bei dem oben beschriebenen Verfahren werden die Sendeimpulszahlen m(i), q(j) und die Empfangsimpulszahlen n(i), p(j) durch Zählen der Impulse des jeweiligen Signals S1, S2, E1, E2 ermittelt.
Es ist aber auch denkbar, lediglich die Sendeimpulszahlen m(i), q(j) durch Zählen zu ermitteln und die Empfangsimpulszahlen n(i), p(j) indirekt durch eine Phasenmodulation der Sendesignale S1, S2 und aus den Sendeimpuls-Zählerständen m, q der Sendesignale S1, S2 zu ermitteln.

Beispielsweise wird zur Ermittlung der Empfangsimpulszahl p(j) der zweiten Sende-Empfangs-Station 2 in der ersten Sende-Empfangs-Station 1 ein Impuls mz aus dem ersten Sendesignal S1 ausgewählt - im dargestellten Beispiel ist das der Impuls mit dem Sendeimpuls-Zählerstand m = 20 - und durch Phasenmodulation markiert. Der ausgewählte Impuls mz wird somit um den Phasenwert $\Delta\varphi$ in die gestrichelt dargestellte Position mz' verschoben oder unterdrückt. Letzteres entspricht einer Phasenverschiebung um 360°. Die Phasenverschiebung hat zur Folge, daß im zweiten Empfangssignal E2 der dem gleichen Zählerstand entsprechende Impuls pz um den Phasenwert $\Delta\varphi$ in die gestrichelt dargestellte Position pz' verschoben wird.

Befindet sich der Impuls pz, wie in der Figur dargestellt, in einer Position, die einem Koinzidenzereignis entspricht, so hat seine Verschiebung in die Position pz' zur Folge, daß das Koinzidenzereignis ausbleibt.

Wenn sich der Impuls pz hingegen in einer Position befindet, die keinem Koinzidenzereignis entspricht, hat seine Verschiebung auch keinen Einfluß auf die Koinzidenzereignisse. Die Koinzidenzereignisse wiederholen sich dann weiterhin mit der normierten Koinzidenzperiode k.

Um die Empfangsimpulszahl p(j) der zweiten Sende-Empfangs-Station 2 zu ermitteln, wird nun geprüft, ob nach der Verschiebung des ausgewählten Impulses mz in der zweiten Sende-Empfangs-Station 2 ein Koinzidenzereignis ausbleibt. Das Ausbleiben eines Koinzidenzereignisses wird dabei erkannt, weil die Koinzidenzereignisse sich erwartungsgemäß mit der normierten Koinzidenzperiode k wiederholen. Wurde nun erkannt, daß das zu einem bestimmten Zeitpunkt erwartete Koinzidenzereignis ausbleibt, wird der zu diesem Zeitpunkt durch Zählen ermittelte Sendeimpuls-Zählerstand q des zweiten Sendesignals S2 als Sendeimpulszahl q(j) gemerkt und der Zählerstand des ausgewählten Impulses mz als Empfangsimpulszahl p(j) gemerkt.

Bei dem in der Figur dargestellten Fall wird das Ausbleiben des Koinzidenzereignisses mit der Nummer j = 3 erkannt, die zugehörige Sendeimpulszahl q(3) auf den Wert q(3) = 23 gesetzt und die zugehörige Empfangsimpulszahl p(3) auf den Wert p(3) = 20, d. h. auf den Zählerstand des Impulses mz gesetzt. Die Empfangsimpulszahl p(3) wird somit indirekt durch Zählen der Impulse des ersten Sendesignals S1 ermittelt.

Hat die Verschiebung des ausgewählten Impulses keinen Einfluß auf die Koinzidenzereignisse, werden die Verfahrensschritte mit neuen ausgewählten Impulsen so oft wiederholt, bis die Wahl auf einen Impuls trifft, dessen Verschiebung das Ausbleiben eines erwarteten Koinzidenzereignisses zur Folge hat.

Für die erste Sende-Empfangs-Station 1 kann die Sendeimpulszahl m(i) und die zugehörige Empfangsimpulszahl n(i) auf die gleiche Art durch Auswahl und Phasenmodulation eines Impulses aus dem zweiten Sendesignal S2 ermittelt werden.

Werden bestimmte Impulse eines der Sendesignale S1, S2 durch Phasenmodulation verschoben, dann ändert sich in derjenigen Sende-Empfangs-Station 1, 2, die das betreffende Sendesignal S1 bzw. S2 empfängt, der Abstand zwischen den Koinzidenzereignissen. Eine Phasenmodulation in der einen Sende-Empfangs-Station 1 oder 2 kann somit in der anderen Sende-Empfangs-Station 2 bzw. 1 detektiert werden. Die Phasenmodulation ermöglicht damit auch die Übertragung von Daten zwischen den Sende-Empfangs-Stationen 1, 2.

Der wesentliche Vorteil der beschriebenen Verfahren liegt darin, daß sie einen hohen Eindeutigkeitsbereich aufweisen und dennoch eine hochauflösende Messung ermöglichen.

Die Messung ist eindeutig, wenn die normierte Signallaufzeit b kleiner als die normierte Koinzidenzperiode k ist, d. h. wenn für die Signallaufzeit $\tau$ gilt

$$\tau < Tmax = g \bullet h \bullet T0.$$

Tmax stellt die Grenze des Eindeutigkeitsbereichs, d. h. den maximalen Meßbereich dar. Werden die Impulswiederholfrequenzen fp1 und fp2 gleich 50 MHz bzw. 50,05 MHz gewählt, erhält man für die Referenzzeit T0 und den maximalen Meßbereich Tmax die Werte T0 = 20 ps und Tmax = 20,02 $\mu$s, d. h. es können Signallaufzeiten $\tau$ bis zu 20,02 $\mu$s mit einer Auflösung von 20 ps gemessen werden. Im Ortsbereich entspricht das einem Meßbereich von rund 6 km bei einer Auflösung von 6 mm.

**Patentansprüche**

1. Verfahren zur Ermittlung des Abstands zwischen zwei Sende-Empfangs-Stationen (1, 2), **dadurch gekennzeichnet, daß**

- in jeder Sende-Empfangs-Station (1, 2) ein Sendesignal (S1, S2) erzeugt wird und als Mikrowellenimpulsreihe mit vorgegebener Impulswiederholfrequenz (fp1, fp2) zur jeweils anderen Sende-Empfangs-Station (2, 1) aussendet und von dieser als Empfangssignal (E2, E1) empfangen wird, wobei die Impulswiederholfrequenzen (fp1, fp2) der Sendesignale (S1, S2) sich um einen vorgegebenen Differenzfrequenzwert (fd) voneinander unterscheiden,

- in jeder Sende-Empfangs-Station (1, 2) das Zusammentreffen von Impulsen des von der jeweiligen Sende-Empfangs-Station (1, 2) ausgesendeten Sendesignals (S1, S2) und empfangenen Empfangssignals (E1, E2) als Koinzidenzereignis detektiert wird,

- für jede Sende-Empfangs-Station (1, 2) zwei der jeweiligen Sende-Empfangs-Station (1, 2) zugeordnete Impulszahlen (m(i), n(i), p(j), q(j)) ermittelt werden, die als Sendeimpulszahl (m(i), q(j)) bzw. Empfangsimpulszahl (n(i), p(j)) die Anzahl der von der jeweiligen Sende-Empfangs-Station (1, 2) ausgesendeten bzw. empfangenen Impulse zum Zeitpunkt eines Koinzidenzereignisses darstellen,

- der Abstand zwischen den Sende-Empfangs-Stationen (1, 2) aus den Impulszahlen (m(i), n(i), p(j), q(j)) berechnet wird.

2. Verfahren nach Anspruch 1, **dadurch gekennzeichnet, daß** für jede Sende-Empfangs-Station (1, 2) der Zeitabstand (a+b, b-a) zwischen dem ersten von der jeweiligen Sende-Empfangs-Station (1, 2) ausgesendeten Impuls und dem ersten von der gleichen Sende-Empfangs-Station (1, 2) empfangenen Impuls aus den für die jeweilige Sende-Empfangs-Station (1, 2) ermittelten Impulszahlen (m(i), n(i), p(j), q(j)) ermittelt wird und daß der Abstand zwischen den Sende-Empfangs-Stationen (1, 2) durch Summation der ermittelten Zeitabstände (a+b, b-a) berechnet wird.

3. Verfahren nach Anspruch 1 oder 2, **dadurch gekennzeichnet, daß** eine Entfernungsmaßzahl (x) als Maß des Abstands zwischen den Sende-Empfangs-Stationen (1, 2) nach der Gleichung

$$x = \big((m(i) - p(j))\big) \cdot g - \big((n(i) - q(j))\big) \cdot h$$

berechnet wird, wobei

- g und h die auf eine Referenzzeit (TO) normierten Perioden (Tp1, Tp2) des von der einen bzw. anderen Sende-Empfangs-Station (1, 2) ausgesendeten Sendesignals (S1, S2) darstellen,
- i und j Zählvariablen für die Anzahl der in der einen bzw. anderen Sende-Empfangs-Station (1, 2) zu einem bestimmten Zeitpunkt detektierten Koinzidenzereignisse darstellen,
- m(i) und n(i) die der einen Sende-Empfangs-Station (1) zugeordnete Sendeimpulszahl bzw. Empfangsimpulszahl zum Zeitpunkt des i-ten Koinzidenzereignisses darstellen und
- q(j) und p(j) die der anderen Sende-Empfangs-Station (2) zugeordnete Sendeimpulszahl bzw. Empfangsimpulszahl zum Zeitpunkt des j-ten Koinzidenzereignisses darstellen.

4. Verfahren nach einem der vorherigen Ansprüche, **dadurch gekennzeichnet, daß** die für die eine Sende-Empfangs-Station (2) ermittelten Impulszahlen (p(j), q(j)) durch Modulation des in der einen Sende-Empfangs-Station (2) erzeugten Sendesignals (S2) zur anderen Sende-Empfangs-Station (1) übertragen werden und daß der Abstand zwischen den Sende-Empfangs-Stationen (1, 2) in dieser Sende-Empfangs-Station (1) berechnet wird.

5. Verfahren nach Anspruch 4, **dadurch gekennzeichnet, daß** das Sendesignal (S2) durch Phasenmodulation moduliert wird.

6. Verfahren nach einem der vorherigen Ansprüche, **dadurch gekennzeichnet, daß** die Impulszahlen (m(i), n(i), q(j), p(j)) durch Zählen der von der jeweiligen Sende-Empfangs-Station (1, 2) ausgesendeten bzw. empfangenen Impulse ermittelt werden.

7. Verfahren nach einem der Ansprüche 1 bis 3, **dadurch gekennzeichnet, daß** in jeder Sende-Empfangs-Station (1, 2) die ausgesendeten Impulse zur Ermittlung von Sendeimpuls-Zählerständen (m, n) gezählt werden.

8. Verfahren nach Anspruch 7, **dadurch gekennzeichnet, daß** die Sendeimpulszahl (q(j)) und die Empfangsimpulszahl (p(j)) für die eine Sende-Empfangs-Station (2) ermittelt werden, indem

- aus dem in der anderen Sende-Empfangs-Station (1) erzeugten Sendesignal (S1) ein einem bestimmten Sendeimpuls-Zählerstand (m) entsprechender Impuls (mz) ausgewählt wird und zeitlich verschoben.oder unterdrückt wird,

- geprüft wird, ob in der einen Sende-Empfangs-Station (2) das nächste Koinzidenzereignis zu einem erwarteten Zeitpunkt eintritt, und

- der einen Sende-Empfangs-Station (2) der in ihr zu dem erwarteten Zeitpunkt ermittelte Sendeimpuls-Zählerstand (q) als Sendeimpulszahl (q(3)) und der Sendeimpuls-Zählerstand (m) des ausgewählten Impulses (mz) als Empfangsimpulszahl (p(3)) zugeordnet wird, wenn zu dem erwarteten Zeitpunkt kein Koinzidenzereignis eintritt.

9. Verfahren nach Anspruch 8, **dadurch gekennzeichnet, daß** die Verfahrensschritte im Falle eines zu dem erwarteten Zeitpunkt eintretenden Koinzidenzereignisses mit neuen ausgewählten Impulsen so oft wiederholt werden, bis ein Koinzidenzereignis zu einem erwarteten Zeitpunkt ausbleibt.

10. Verfahren nach Anspruch 8 oder 9, **dadurch gekennzeichnet, daß** die Empfangsimpulszahlen (n(i), p(j)) für beide Sende-Empfangs-Stationen (1, 2) in gleicher Weise ermittelt werden.

11. Verfahren nach einem der vorherigen Ansprüche, **dadurch gekennzeichnet, daß** der Differenzfrequenzwert (fd) wesentlich kleiner als die Impulswiederholfrequenzen (fp1, fp2) der Sendesignale (S1, S2) ist.

12. Verfahren nach einem der vorherigen Ansprüche, **dadurch gekennzeichnet, daß** zwischen den Sende-Empfangs-Stationen (1, 2) Daten durch Phasenmodulation der Sendesignale (S1, S2) übertragen werden.

13. Verfahren nach einem der vorherigen Ansprüche, **dadurch gekennzeichnet, daß** in den Sende-Empfangs-Stationen (1, 2) das in der jeweiligen Sende-Empfangs-Station (1, 2) erzeugte Sendesignal (S1, S2) mit dem von dieser Station empfangenen Empfangssignal (E1, E2) durch Mischung in ein Zwischenfrequenzsignal (Z1, Z2) umgesetzt wird, das Zwischenfrequenzsignal (Z1, Z2) durch Filterung und Hüllkurvendemodulation in ein impulsförmiges Auswertesignal (D1, D2) umgesetzt wird und die zeitliche Position der Impulse des Auswertesignals (D1, D2) als Zeitpunkte (t11, t12, t21, t22) ermittelt werden, zu denen ein Koinzidenzereignis eintritt.

14. Verwendung des Verfahrens nach einem der vorherigen Ansprüche in einem schlüssellosen Schließsystem für Kraftfahrzeuge zur Ermittlung des Abstands zwischen einer im Kraftfahrzeug vorgesehenen Sende-Empfangs-Station und einer in einem Schlüsselmodul vorgesehenen weiteren Sende-Empfangs-Station.

## Claims

1. A method for determining the distance between two transmitting and receiving stations (1, 2), **characterized in that**

   - a transmission signal (S1, S2) is generated in each transmission-receiving station (1, 2) and is transmitted as a series of microwave pulses with a predefined pulse repetition rate (fp1, fp2) to the other respective transmission-receiving station (2, 1), where it is received by said station as a reception signal (E2, E1), whereby the pulse repetition rates (fp1, fp2) of the transmission signals (S1, S2) differ by a predefined differential frequency value

   - in each transmission-receiving station (1, 2), the coincidence of pulses of the transmission signal (S1, S2) sent by the respective transmission-receiving station (1, 2) and the received reception signal (E1, E2) is detected as a coincidence event

   - for each transmission-receiving station (1, 2), two of the pulse numbers (m(i), n(i), p(j), q)j)) which are assigned to the respective transmission-receiving station (1, 2), which as the transmission pulse number (m(i), q(j)) or reception pulse number (n(i), p(j)) represent the number of pulses transmitted or received by the respective transmission-receiving station (1, 2) at the point in time of a coincidence event

   - the distance between the transmission-receiving stations (1, 2) is calculated from the pulse numbers (m(i), n(i), p(j), q)j))

2. A procedure according to claim 1, **characterized in that** for each transmission-receiving station (1, 2), the time difference (a + b, b - a) between the first pulse transmitted by the respective transmission-receiving station (1, 2), and the first pulse received by the same transmission-receiving station (1, 2) is determined from the pulse numbers (m(i), n(i), p(j), q)j)) determined for the respective transmission-receiving station (1, 2), and that the distance between the respective transmission-receiving stations (1, 2) is calculated by adding together the determined time differences (a + b, b - a).

**3.** A procedure according to either of claims 1 or 2, **characterized in that** the distance figure (x) is calculated as the value of the distance between the transmission-receiving stations (1, 2), according to the following equation:

$$x = ((m(i) - p(j)) \bullet g - (n(i) - q(j)) \bullet h$$

whereby

- g and h represent the periods (Tp1, Tp2), which have been standardized to a reference time (T0), of the transmission signal (S1, S2) which has been transmitted by one or other of the transmission-receiving stations (1, 2)
- i and j represent the counting variables for the number of coincidence events detected at a specific time point in one or other of the transmission-receiving stations (1, 2)
- m(i) and n(i) represent the transmission pulse number or receiving pulse number assigned to one transmission-receiving station (1) at the time of the i-th coincidence event, and
- q(j) and p(j) represent the transmission pulse number or receiving pulse number assigned to the other transmission-receiving station (2) at the time of the j-th coincidence event

**4.** A procedure according to any one of the above claims, **characterized in that** the pulse numbers (p(j), q(j)) determined for one transmission-receiving station (2) are transferred to the other transmission-receiving station (1) by modulating the transmission signal (S2) generated in the one transmission-receiving station (2), and that the distance between the transmission-receiving stations (1, 2) is calculated in this transmission-receiving station (1).

**5.** A procedure according to claim 4, **characterized in that** the transmission signal (S2) is modulated using phase modulation.

**6.** A procedure according to any one of the above claims, **characterized in that** the pulse numbers (m(i), n(i), q(j), p(j)) are determined by counting the pulses transmitted or received by the respective transmission-receiving station (1,2).

**7.** A procedure according to any one of claims 1 to 3, **characterized in that** in each transmission-receiving station (1, 2) the transmitted pulses are counted in order to determine the transmission pulse counting totals (m, n).

**8.** A procedure according to claim 7, **characterized in that** the transmission pulse number (q(j)) and the receiving pulse number (p(j)) are determined for the one transmission-receiving station (2), in which

- from the transmission signal (S1) generated in the other transmission-receiving station (1) in a specific transmission pulse counting total (m), a corresponding pulse (mz) is selected and time displaced or suppressed
- a check is made as to whether in the one transmission-receiving station (2) the next coincidence event occurs at the anticipated point in time, and
- the one transmission-receiving station (2), is assigned the transmission pulse counting total (q) determined in said station at the anticipated point in time as a transmission pulse figure (q(3)) and the transmission pulse counting total (m) of the selected impulse (mz) is assigned as a receiving signal (p(3)) if no coincidence event occurs at the anticipated point in time.

**9.** A procedure according to claim 8, **characterized in that** the procedural stages in cases where the coincidence event occurs at the anticipated point in time are repeated with newly selected pulses until a coincidence event fails to occur at the anticipated point in time.

**10.** A procedure according to either claim 8 or claim 9, **characterized in that** the receiving pulse numbers (n(i), p(j)) for both transmission-receiving stations (1, 2) are determined in the same manner.

**11.** A procedure according to any one of the above claims, **characterized in that** the differential frequency value (fd) is significantly lower than the pulse repetition frequencies (fp1, fp2) of the transmission signals (S1, S2).

**12.** A procedure according to any one of the above claims, **characterized in that** between the transmission-receiving stations (1, 2), data is transmitted via phase modulation of the transmission signals (S1,S2).

**13.** A procedure according to any one of the above claims, **characterized in that** in the transmission-receiving stations (1, 2), the transmission signal (S1, S2) generated in the respective transmission-receiving station (1, 2) is converted with the receiving signal (E1, E2) received by this station by mixing into an interim frequency signal (Z1, Z2), the interim frequency signal (Z1, Z2) is converted using filtration and envelope modulation into a pulse-formed evaluation signal (D1, D2), and the time position of the pulses of the evaluation signal (D1, D2) as points in time (t11, t12, t21, t22) at which a coincidence event occurs.

**14.** The utilization of a procedure according to any one of the above claims in a key-less locking system for motor vehicles in order to determine the distance between a transmission-receiving station provided in the motor vehicle and a further transmission-receiving station provided in a key module.

**Revendications**

**1.** Procédé pour la détermination de la distance entre deux stations d'émission-réception (1, 2), **caractérisé en ce que**

- dans chaque station d'émission-réception (1, 2), un signal d'émission (S1, S2) est généré et est transmis respectivement à l'autre station d'émission-réception (2, 1) comme série d'impulsions à micro-ondes avec fréquence de répétition d'impulsion (fp1, fp2) prédéterminée et est reçu par celle-ci comme signal de réception (E2, E1), les fréquences de répétition d'impulsion (fp1, fp2) des signaux d'émission (S1, S2) se distinguant l'une de l'autre par une valeur de fréquence différentielle (fd),
- dans chaque station d'émission-réception (1, 2), la coïncidence d'impulsions du signal d'émission (S1, S2) émis par la station d'émission-réception (1, 2) respective et du signal de réception (E1, E2) reçu est détectée comme événement de coïncidence,
- pour chaque station d'émission-réception (1, 2), deux nombres d'impulsion (m(i), n(i), p(j), q(j)) attribués à la station d'émission-réception (1, 2) respective sont déterminés, lesquels, en tant que nombre d'impulsions d'émission (m(i), q(j)) ou encore en tant que nombre d'impulsions de réception (n(i), p(j)) représentent le nombre des impulsions émises ou encore reçues par la station d'émission-réception (1, 2) respective à l'instant d'un événement de coïncidence,
- la distance entre les stations d'émission-réception (1, 2) est calculée à partir des nombres d'impulsion (m(i), n(i), p(j), q(j)).

**2.** Procédé selon la revendication 1, **caractérisé en ce que**, pour chaque station d'émission-réception (1, 2), l'intervalle de temps (a+b, b-a) entre la première impulsion émise par la station d'émission-réception (1, 2) respective et la première impulsion reçue par la même station d'émission-réception (1, 2) est déterminé à partir des nombres d'impulsion (m(i), n(i), p(j), q(j)) déterminés pour la station d'émission-réception (1, 2) respective et **en ce que** la distance entre les stations d'émission-réception (1, 2) est calculée par sommation des intervalles de temps déterminés (a+b, b-a).

**3.** Procédé selon les revendications 1 ou 2, **caractérisé en ce qu'**un nombre de mesure de distance (x) est calculé comme mesure de la distance entre les stations d'émission-réception (1, 2) selon l'équation

$$x = ((m(i) - p(j)) \bullet g - ((n(i) - q(j)) \bullet h,$$

- g et h représentant les périodes (Tp1, Tp2), normées par rapport à un temps de référence (T0), du signal d'émission (S1, S2) émis par l'une ou encore l'autre des stations d'émission-réception (1, 2),
- i et j représentant des variables de comptage pour le nombre des événements de coïncidence détectés à un instant donné dans l'une ou encore dans l'autre station d'émission-réception (1, 2),
- m(i) et n(i) représentant le nombre d'impulsions d'émission ou le nombre d'impulsions de réception attribué à l'une des stations d'émission-réception (1) à l'instant du i-ème événement de coïncidence et
- p(j) et q(j) représentant le nombre d'impulsions d'émission ou le nombre d'impulsions de réception attribué à l'autre station d'émission-réception (2) à l'instant du j-ème événement de coïncidence.

4. Procédé selon l'une des revendications précédentes, **caractérisé en ce que** les nombres d'impulsions (p(j), q(j)) déterminés pour la station d'émission-réception (2) sont transmis à l'autre station d'émission-réception (1) par modulation du signal d'émission (S2) généré dans l'une des stations d'émission-réception (2) et **en ce que** la distance entre les stations d'émission-réception (1, 2) est calculée dans cette station d'émission-réception (1).

5. Procédé selon la revendication 4, **caractérisé en ce que** le signal d'émission (S2) est modulé par modulation de phase.

6. Procédé selon l'une des revendications précédentes, **caractérisé en ce que** les nombres d'impulsion (m(i), n(i), p(j), q(j)) sont déterminés par comptage des impulsions émises ou encore reçues par la station d'émission-réception (1, 2) respective.

7. Procédé selon l'une des revendications 1 à 3, **caractérisé en ce que**, dans chaque station d'émission-réception (1, 2), les impulsions émises sont comptées pour la détermination d'états de compteur d'impulsions d'émission (m, n).

8. Procédé selon la revendication 7, **caractérisé en ce que** le nombre d'impulsions d'émission (q(j)) et le nombre d'impulsions de réception (p(j)) sont déterminés pour l'une des stations d'émission-réception (2), par le fait que

- à partir du signal d'émission (S1) généré dans l'autre station d'émission-réception (1), une impulsion (mz) correspondant à un état de compteur d'impulsions d'émission (m) est sélectionnée et décalée dans le temps ou supprimée,
- on vérifie si l'événement de coïncidence suivant se manifeste à un instant anticipé dans l'une des stations d'émission-réception (2), et
- l'état de compteur d'impulsions d'émission (q) déterminé dans la station d'émission-réception (2) à l'instant anticipé lui est attribué comme nombre d'impulsions d'émission (q(3)) et l'état de compteur d'impulsions d'émission (m) de l'impulsion sélectionnée (mz) lui est attribué comme nombre d'impulsions de réception (p(3)), lorsqu'aucun événement de coïncidence n'a lieu à l'instant anticipé.

9. Procédé selon la revendication 8, **caractérisé en ce que**, en cas d'un événement de coïncidence ayant lieu à l'instant anticipé, les étapes de procédé sont répétées avec de nouvelles impulsions sélectionnées jusqu'à ce qu'un événement de coïncidence manque à un instant anticipé.

10. Procédé selon l'une des revendications 8 ou 9, **caractérisé en ce que** les nombres d'impulsion de réception (n(i), p(j)) sont déterminés de la même manière pour les deux stations d'émission-réception (1, 2).

11. Procédé selon l'une des revendications précédentes, **caractérisé en ce que** la valeur de fréquence différentielle (fd) est beaucoup plus faible que les fréquences de répétition d'impulsion (fp1, fp2) des signaux d'émission (S1, S2).

12. Procédé selon l'une des revendications précédentes, **caractérisé en ce que** des données sont transmises par modulation de phase des signaux d'émission (S1, S2) entre les stations d'émission-réception (1, 2).

13. Procédé selon l'une des revendications précédentes, **caractérisé en ce que**, dans les stations d'émission-réception (1, 2), le signal d'émission (S1, S2) généré dans la station d'émission-réception (1, 2) respective est transformé, avec le signal de réception (E1, E2) reçu par cette station, par mélange, en un signal de fréquence intermédiaire (Z1, Z2), le signal de fréquence intermédiaire (Z1, Z2) est transformé par filtrage et modulation d'enveloppe en un signal d'évaluation (D1, D2) en forme d'impulsion et la position temporelle des impulsions du signal d'évaluation (D1, D2) est déterminée comme instants (t11, t12, t21, t22), auxquels un événement de coïncidence a lieu.

14. Utilisation du procédé selon l'une des revendications précédentes dans un système de verrouillage sans clef pour véhicules à moteur pour la détermination de la distance entre une station d'émission-réception prévue dans le véhicule à moteur et une autre station d'émission-réception prévue dans un module de verrouillage.

FIG. 1

EP 1 549 971 B1

13

FIG.2

FIG.3